# EUROPEAN PATENT APPLICATION

(11) **EP 3 667 596 A1**
(43) Date of publication of application: **17.06.2020**
(21) Application number: 18211785.3
(22) Date of filing: 11.12.2018
(51) Int. Cl.: G06Q 20/40, G06Q 20/20, H04L 29/06, G06Q 20/32

(54) **BIOMETRICALLY SECURED AGE AUTHENTICATION**

(71) Applicant: Mastercard International Incorporated, Purchase NY 10577 (US)
(72) Inventor: BIGGS, Alistair Frederick Brodie, Leighton Buzzard, Bedfordshire LU7 4DJ (GB)
(74) Representative: Gill Jennings & Every LLP

(57) **Abstract**

The present disclosure relates to biometrically securing authentication of the age of a user, when age authentication is required for an electronic point of sale terminal (POS) to provide an approval. There is provided a method performed by an electronic payment device, the method comprising: receiving a request for user age authentication from a POS; biometrically authenticating the user's identity; subsequent to receiving the request for user age authentication and biometrically authenticating the user's identity: retrieving user age data from a memory of the device and transmitting the user age data to the POS; and retrieving payment credentials from the memory and transmitting the payment credentials to the POS. There are also provided an electronic payment device, a method performed by a POS, a POS and a computer readable medium comprising computer executable instructions which, when executed by a processor, cause either of the aforementioned methods to be performed.

## Description

### FIELD

The present disclosure relates to biometrically securing authentication of the age of a user, when age authentication is required for an electronic point of sale terminal (POS) to provide an approval.

More specifically, aspects relate to an electronic payment device, a POS, methods performed by each and a computer readable medium comprising computer executable instructions which, when executed by a processor, cause those methods to be performed.

### BACKGROUND

Electronic payment devices such as credit cards, debit cards and payment-enable mobile devices including smartphones and smartwatches are becoming increasingly widespread, as are the electronic point of sale terminals they can be used at. The electronic payment infrastructure is increasing the speed and accuracy of payments and related processes such as credit applications, and reducing the need for staff to be present at terminals.

However, there are still aspects of these processes which require manual intervention in some circumstances, which can significantly reduce their overall speed and efficiency. For example, where a product or service is age-restricted, or different conditions (e.g. discounts) apply to different age groups, a manual check of the consumer's identification documents for their date of birth is required. The member of staff performing the check must then calculate the consumer's age and proceed (or not) accordingly. This causes delays, for example when attempting to purchase alcohol at a supermarket self-checkout, or when applying for a store card or mobile phone contract.

What is needed is a way of automatically authenticating the age of a user of an electronic payment device.

### SUMMARY

According to a first aspect, there is provided a method performed by an electronic payment device, the method comprising: receiving a request for user age authentication from an electronic point of sale terminal (POS); biometrically authenticating the user's identity; subsequent to receiving the request for user age authentication and biometrically authenticating the user's identity: retrieving user age data from a memory of the device and transmitting the user age data to the POS; and retrieving payment credentials from the memory and transmitting the payment credentials to the POS.

The method can further comprise, prior to receiving the request for user age authentication and biometrically authenticating the user's identity, securely storing the user age data in the memory of the device.

The user age data can be stored as hash data.

The user age data can be stored with digital certificate data.

The user age data and the payment credentials can be transmitted to the POS in a single message.

Biometrically authenticating the user's identity can comprise reading the user's biometrics using a biometric reader comprised in the electronic payment device.

Biometrically authenticating the user's identity can comprise obtaining a biometric reading from the user and comparing that biometric reading to a reference biometric signature stored in the memory of the electronic payment device.

Biometrically authenticating the user's identity can be performed in response to receiving the request for user age authentication.

According to a second aspect there is provided an electronic payment device comprising: a transmitter; a processor; and a memory comprising payment credentials and computer executable instructions which, when executed by the processor, cause the electronic payment device to perform the method of the first aspect.

The electronic payment device can further comprise a biometric reader.

According to a third aspect there is provided a method performed by an electronic point of sale terminal (POS), the method comprising: requesting user age authentication from an electronic payment device; subsequently: receiving user age data from the electronic payment device; and receiving payment credentials from the electronic payment device; then, in response to receiving both the user age date and the payment credentials, transmitting the payment credentials to a payment network.

The user age data and the payment credentials can be received from the electronic payment device in a single message.

According to a fourth aspect there is provided an electronic point of sale terminal (POS) comprising: a receiver; a transmitter; a processor; and a memory comprising computer executable instructions which, when executed by the processor, cause the terminal to perform the method of the third aspect.

According to a fifth aspect there is provided a computer readable medium comprising computer executable instructions which, when executed by a processor, cause the method of either of the firs or third aspects to be performed.

### BRIEF DESCRIPTION OF THE FIGURES

Aspects of the present disclosure will now be described by way of example with reference to the accompanying figures. In the figures:
Figure 1 schematically illustrates an example of how an electronic payment device could be used with a POS; and
Figures 2A, 2B, 2C and 2D provide a flowchart illustrating in more detail an example process which could be followed by the system of Figure 1.

### DETAILED DESCRIPTION OF THE FIGURES

The following description is presented to enable any person skilled in the art to make and use the system, and is provided in the context of a particular application. Various modifications to the disclosed embodiments will be readily apparent to those skilled in the art.

An electronic payment device, such as a credit card or payment-enabled smartphone, stores user age data such as the user's date of birth, or a flag to indicate whether or not they belong to a particular age group (e.g. over 18). This user age data is transmitted from the electronic payment device to a POS in response to a request from the POS, provided that the user has been biometrically authenticated. In this way, the user's age can be authenticated without any need for manual staff intervention.

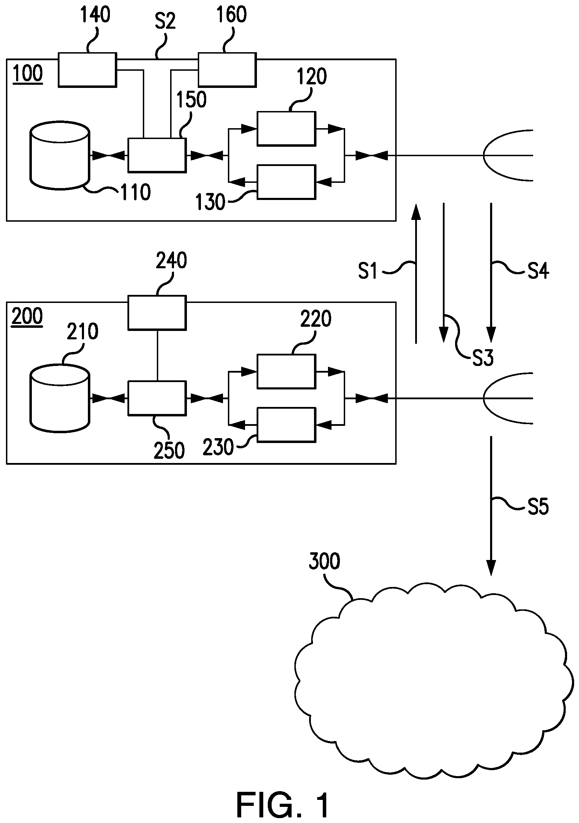

Figure 1 schematically illustrates an example of how such an electronic payment device 100 could be used with such a POS 200. The electronic payment device 100 and POS 200 each comprise a memory (respectively 110 and 210), a transmitter (respectively 120 and 220), a receiver (respectively 130 and 230), optionally one or more user interface devices (respectively 140 and 240) and a processor (respectively 150 and 250), operatively coupled to each of the device's memory, transmitter, receiver and (where present) user interface device(s).

At step S1 the transmitter 220 of the POS 200 communicates with the receiver 130 of the electronic payment device 100 to request user age authentication. At step S2 the electronic payment device 100 biometrically authenticates the user. At step S3 the electronic payment device 100 retrieves user age data from its memory 110 and transmits this to the receiver 230 of the POS 200 using its transmitter 120. At step S4 the electronic payment device 100 retrieves payment credentials from its memory 110 and transmits them to the receiver 230 of the POS 200 using its transmitter 120. At step S5 the POS 200 relays the payment credentials to a payment network 300 for processing using its transmitter 220, for example as part of a transaction request or to set up a new credit product such as a store card.

The electronic payment device 100 could be a physical payment card, for example a credit card, a debit card, a prepaid card or a store card. Alternatively, it could be a payment-enabled mobile device, for example a smartphone, smartwatch or tablet.

The user age data could be stored in the memory 110 of the electronic payment device 100 securely, for example as hash data or with a digital certificate. The biometric authentication could trigger release of the user age data to the POS 200 in a manner which can be used by the POS 200, so for example could trigger decryption of the user age data or cryptographic key exchange between the electronic payment device 100 and POS 200 as necessary.

The biometric authentication could be performed in response to receiving the request for user age data from the POS 200. Alternatively, it could be performed prior to this, for example as part of the user logging into a payment app running on the electronic payment device 100 or in response to the user triggering a biometric reader, e.g. by pressing a digit to a fingerprint reader.

The biometric authentication could be performed entirely by the electronic payment device 100. For example its memory 110 could store a reference biometric signature obtained during a registration procedure. The processor 150 of the electronic payment device 100 could compare this with a biometric reading taken by an in-built biometric reader 160 of the electronic payment device 100, with the user's identity being authenticated if they are determined to match. The biometric reader 160 could for example be a fingerprint scanner, iris scanner or facial recognition camera.

Alternatively, the biometric reader could be a separate device configured to communicate with the electronic payment device 100. For example it could be a dedicated biometric reader, or it could be comprised in a mobile device such a smartphone.

The reference biometric signature need not be stored in the memory 110 of the electronic payment device 100. It could instead be stored remotely, in a computing device configured to communicate with the electronic payment device 100 such as a smartphone, personal computer or server.

Similarly, the processing required to compare the reference biometric signature to the biometric reading need not be performed by the electronic payment device's on-board processor 150, but instead could be performed remotely by a computing device configured to communicate with the electronic payment device 100 such as a smartphone, personal computer or server.

Which elements of the biometric authentication the electronic payment device 100 is responsible for in a particular implementation can be chosen by balancing the relative speed and security of performing those elements on the electronic payment device 100 against the implications this has for its required size and power usage.

The respective transmitters 120, 220 and receivers 130, 230 of the electronic payment device 100 and POS 200 could each communicate using one or more technologies, for example one or more of: near field communication (NFC, as typically used in contactless transactions), direct integrated circuit (IC) chip connection (as typically used in chip and PIN transactions), cellular network communication, Bluetooth™ and WiFi.

Steps S3 and S4 could be combined by transmitting the user age data and payment credentials in a single message to save time. Alternatively, if the user age data is transmitted first then the POS 200 can determine whether the user meets an age restriction criterion and determine how to proceed in dependence on the result.

For example, if the user is attempting to checkout a basket of groceries including a bottle of wine at a supermarket self-checkout, if the POS 200 determines the user age data to indicate that the user is above the local legal age for alcohol purchase then it can request payment credentials from the electronic payment device 100 without any user intervention. If the POS 200 determines the user age data to indicate that the user is below the local legal age for alcohol purchase however, it could instead inform the user that they should remove the bottle from the checkout area and place it in a holding area for products to be returned to the shelves. For example the user could be informed using one or more user interface devices 240 such as a touch screen and/or a speaker. Once the POS 200 detects that the bottle has been moved to the holding area (for example by means of scales built into the checkout area and the holding area), it can recalculate the total basket price, optionally inform the user of the new total, then request payment credentials from the electronic payment device. Those credentials can then be included in a transaction request comprising the updated basket total price.

The POS 200 could be comprised in a self-checkout machine or automatic teller machine (ATM). Alternatively it could be comprised in a manned checkout or customer service desk.

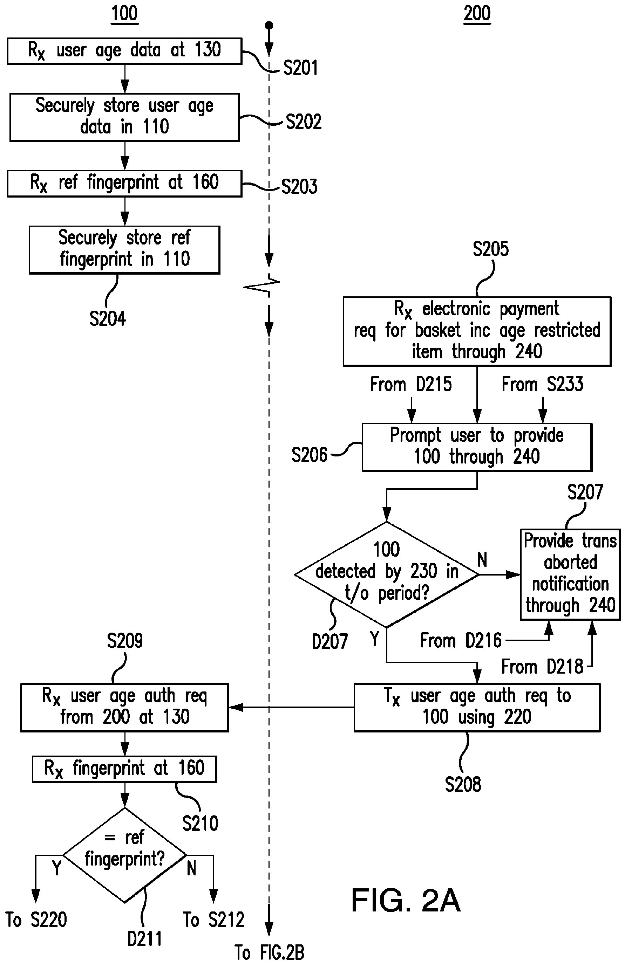

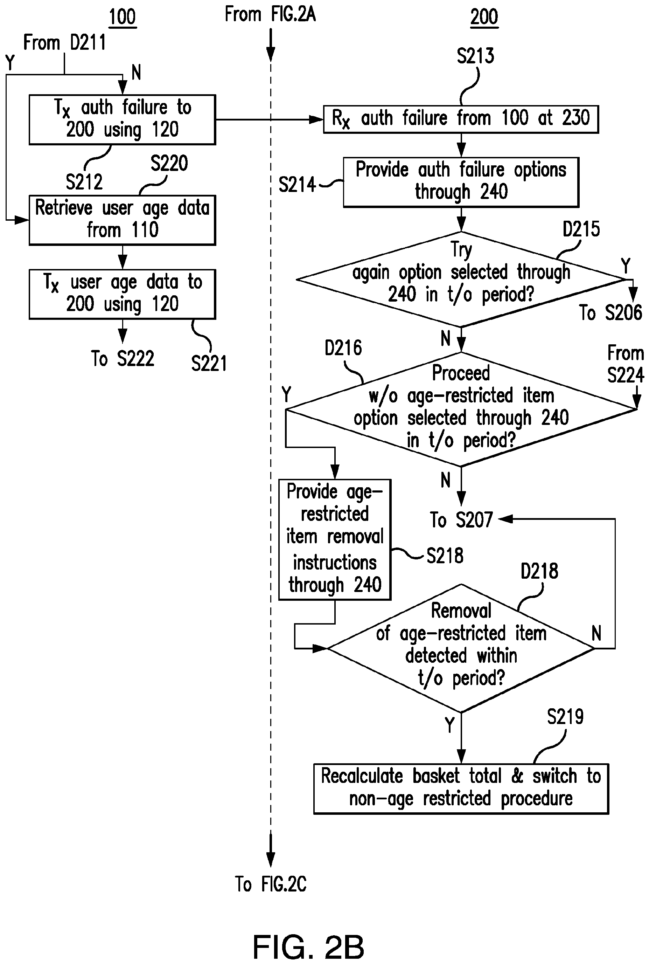

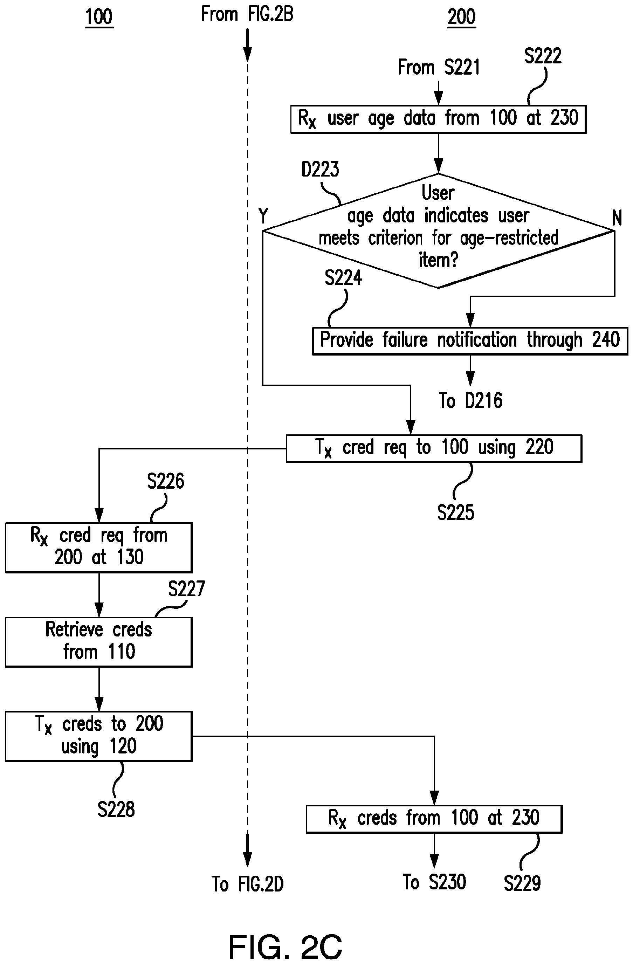

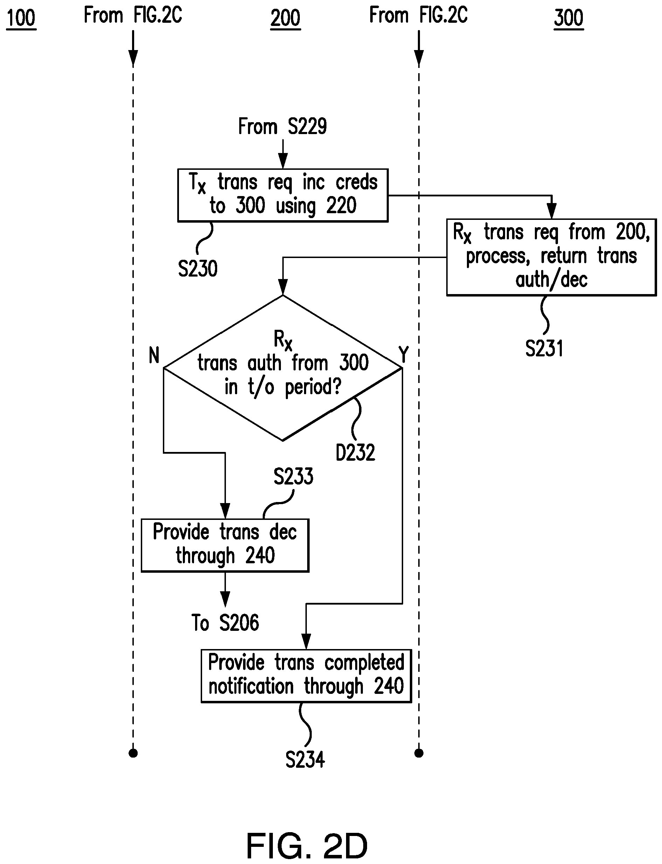

Figures 2A to 2D provide a flowchart illustrating in more detail an example process which could be followed by the electronic payment device 100, POS 200 and payment network 300 of Figure 1. In this example the electronic payment device 100 is a contactless payment card equipped with a fingerprint reader 160 and the POS 200 is incorporated in a supermarket self-service checkout having a touchscreen 240 and an NFC reader.

The flow begins with biometric age registration at steps S201 to S204. This could be done for example at a bank or a post office, with a member of staff being able to configure the card as necessary on sight of official identification documentation bearing the user's date of birth. At step S201 user age data is received by the card 100, for example from a bank teller's terminal. This is then stored securely in the card's memory 110 at step S202. At step S203 the fingerprint reader 160 of the card 100 receives a reference fingerprint and it is securely stored in the memory 110 at step S204.

At a later time, the POS 200 receives an electronic payment request at step S205 through the touchscreen 240, in respect of a basket of goods including an age-restricted item. In response to this, at step S206 the touchscreen 240 prompts the user to present their card 100, with their finger on its fingerprint reader 160, for age authentication. The processor 250 of the POS 200 checks whether the electronic payment device 100 is detected by the NFC reader within a time-out period at determination D207 and the flow ends with display of a "transaction aborted" notification on the touchscreen 240 at step S207 if not.

If the card 100 is detected within the time-out period then the transmitter 220 of the POS 200 transmits a user age authentication request to it.

The card's receiver 130 receives the request at step S209. The user then places their finger on the card's in-built fingerprint reader 160 so that the fingerprint reader 160 receives the user's fingerprint at step S210. The card's processor 150 then checks at determination D211 whether the received fingerprint matches the reference fingerprint stored in the memory 110.

If the received fingerprint does not match the stored reference fingerprint then the card's transmitter 120 transmits an authorisation failure message to the POS 200 at step S212, which is received by its receiver 230 at step S213. The touchscreen 240 then displays an authorisation failure notification graphical user interface (GUI) at step S214, comprising selectable options to try again or to proceed without the age-restricted item.

If selection of the "try again" option is detected by the processor 250 of the POS 200 before expiry of a further time-out period at determination D215 then the flow returns to step S206 to prompt the user again as described above. If not, then the flow proceeds to determination D216.

If selection of the "proceed without age-restricted item" option is also not detected before expiry of the further time-out period at determination D216 then the flow ends at S207 as described above.

If the "proceed without age-restricted item" option is selected within the further time-out period then at step S218 the touchscreen 240 displays instructions to the user to remove the age-restricted item from the purchasing scales and place it on nearby returns scales. The processor 250 of the POS 200 monitors for this action at determination D218 and if it is not detected within a further time-out period the flow ends at step S207 as described above. Otherwise, the flow ends at step S219, wherein the basket total is recalculated (without the age-restricted item) by the processor 250 and the POS 200 switches to enacting a non-age-restricted transaction procedure.

Returning to determination D211, if the received fingerprint does match the reference fingerprint then at step S220 the card 100 retrieves the user age data from its memory 110, and then transmits it to the POS 200 using its transmitter 120 at step S221.

The receiver 230 of the POS 200 receives the user age data from the card 100 at step S222 and then the processor 250 of the POS 200 checks whether the user age data indicates that the user meets an age criterion for sale of the age-restricted product at determination D223. If not, the touchscreen 240 displays a failure notification GUI at step S224 including a "proceed without age-restricted item" button. The flow then proceeds to determination D216, as described above. However if the age criterion is met, the transmitter 220 of the POS 200 transmits a payment credentials request to the card 100 at step S225.

The payment credentials request is received by the receiver 130 of the card 100 at step S226. Payment credentials stored in the memory 110 are then retrieved at step S227 and transmitted to the POS 200 by transmitter 120 at step S228.

The receiver 230 of the POS 200 receives the payment credentials at step S229, and then the transmitter 220 forwards them to the payment network 300 in a transaction request including other details, including the transaction amount, at step S230.

At step S231 the payment network 300 receives the transaction request from the POS 200, processes it and returns either an authorised or a declined response.

At determination D232 the POS 200 determines whether its receiver 230 has received an authorise response from the payment network 300 within a further time-out period. If not, a transaction declined notification is displayed on the touchscreen 240 at step S233 and the flow returns to S206 to prompt the user to try again with a different card.

If an authorise response is determined to have been received at determination D232 then the flow ends with a "transaction completed" notification being displayed on the touchscreen 240 at step S234.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Such a communication link can optionally further comprise one or more relaying transceivers.

User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A method performed by an electronic payment device, the method comprising:
receiving a request for user age authentication from an electronic point of sale terminal (POS);
biometrically authenticating the user's identity;
subsequent to receiving the request for user age authentication and biometrically authenticating the user's identity:
retrieving user age data from a memory of the device and transmitting the user age data to the POS; and
retrieving payment credentials from the memory and transmitting the payment credentials to the POS.

2. The method of claim 1 further comprising, prior to receiving the request for user age authentication and biometrically authenticating the user's identity, securely storing the user age data in the memory of the device.

3. The method of claim 2, wherein the user age data is stored as hash data.

4. The method of either of claims 2 or 3, wherein the user age data is stored with digital certificate data.

5. The method of any preceding claim, wherein the user age data and the payment credentials are transmitted to the POS in a single message.

6. The method of any preceding claim, wherein biometrically authenticating the user's identity comprises reading the user's biometrics using a biometric reader comprised in the electronic payment device.

7. The method of any preceding claim, wherein biometrically authenticating the user's identity comprises obtaining a biometric reading from the user and comparing that biometric reading to a reference biometric signature stored in the memory of the electronic payment device.

8. The method of any preceding claim, wherein biometrically authenticating the user's identity is performed in response to receiving the request for user age authentication.

9. An electronic payment device comprising:
a transmitter;
a processor; and
a memory comprising payment credentials and computer executable instructions which, when executed by the processor, cause the electronic payment device to perform the method of any preceding claim.

10. The electronic payment device of claim 9, as dependent directly or indirectly on claim 6, further comprising a biometric reader.

11. A method performed by an electronic point of sale terminal (POS), the method comprising:
requesting user age authentication from an electronic payment device;
subsequently:
receiving user age data from the electronic payment device; and
receiving payment credentials from the electronic payment device;
then, in response to receiving both the user age date and the payment credentials, transmitting the payment credentials to a payment network.

12. The method of claim 11, wherein the user age data and the payment credentials are received from the electronic payment device in a single message.

13. An electronic point of sale terminal (POS) comprising:
a receiver;
a transmitter;
a processor; and
a memory comprising computer executable instructions which, when executed by the processor, cause the terminal to perform the method of either of claims 11 or 12.

14. A computer readable medium comprising computer executable instructions which, when executed by a processor, cause the method of any of claims 1 to 8, 11 or 12 to be performed.
